Europäisches Patentamt

(19) European Patent Office

Office européen des brevets

(11) **EP 0 943 658 A1**

(12) **EUROPEAN PATENT APPLICATION**

(43) Date of publication:
22.09.1999 Bulletin 1999/38

(51) Int. Cl.$^6$: **C08L 67/00**, C08L 67/02, G03G 9/087

(21) Application number: 98105001.6

(22) Date of filing: 19.03.1998

(84) Designated Contracting States:
AT BE CH DE DK ES FI FR GB GR IE IT LI LU MC NL PT
Designated Extension States:
AL LT LV MK RO SI

(71) Applicant: **Ticona GmbH**
**65451 Kelsterbach (DE)**

(72) Inventors:
 • **Ward, Bennett Clayton, Dr.**
 **28037 Denver, North Carolina (US)**

• **Wulf, Stefan, Dr.**
 **41066 Mönchengladbach (DE)**
• **Shiwaku, Toshio**
 **416 Fuji (JP)**
• **Tien, Tze-Pei**
 **07920 Basking Ridge, New Jersey (US)**
• **Yoon, Hyon-Nam**
 **07974 New Providence, New Jersey (US)**
• **East, Anthony**
 **07940 Madison, New Jersey (US)**

(54) **Spherical, dyable polyester particles, process for their production and their use for high resolution toners**

(57) The invention relates to sperical, dyable polyester particles having a mean particle size between 2 and 15 μm and a particle size distribution with a span (=d90-d10/d50) ≤ 1.5, a process for their preparation and their use for toner compositions in electrophotographic and direct printing systems.

EP 0 943 658 A1

**Description**

<u>Background of the invention:</u>

The present invention relates to dyable, spherical polyester particles having particle sizes of 2 to 15 $\mu$m, with narrow particle size distribution, to which can be bound with certain organic dyes, then rendering these particles suitable for application for toners and use in electrophotography and direct printing. More specifically these compositions have utility in use for high resolution electrophotography, where conventional toner materials are too large to meet high resolution requirements. Additionally, these compositions have an excellent combination of mechanical and rheological properties, low melt viscosity and melt fluidity, and low fusing temperatures. The small, spherical particles lead to much improved powder handling and flow characteristics than is common with conventionally produced toner particles, which are normally irregularly shaped from standard extrusion and grinding technology.

The formation and development of images on the surface of photoconductive materials by electrostatic means is well known. The basic electrophotographic imaging process (US-A- 2,297,691) involves placing a uniform electrostatic charge on a photoconductive insulation layer known as a photoconductor or photoreceptor, exposing the photoreceptor to a light and shadow image to dissipate the charge on the areas of the photoreceptor exposed to the light, and developing the resulting electrostatic latent image by depositing on the image a finely divided electroscopic toner material. The toner will normally be attracted to those areas of the photoreceptor which retain a charge, thereby forming a toner image corresponding to the electrostatic latent image. This developed image may then be transferred to a substrate such as paper. The transferred image subsequently may be permanently affixed to the substrate by heat, pressure, a combination of heat and pressure, or other suitable fixing means such as solvent or overcoating treatment.

Toner and developer compositions including colored developer compositions are in wide use. These compositions normally contain toner particles consisting of resin and colorants, and carrier particles. The colorants usually are selected from cyan dyes or pigments, magenta dyes or pigments, yellow dyes or pigments, black dyes or pigments (or carbon black) and mixtures thereof.

One of the main advantages of selecting organic dyes instead of pigments for color toner compositions resides in the provisions of increased color fidelity and transparency as the dyes can be molecularly dispersed in the toner resins. To obtain a homogeneous dispersion, it is generally necessary to build into these molecules certain substituents for enhancing their compatibility with the toner resin. Unless the dye molecules are substantially fully compatible with the toner resins, they have a tendency to aggregate with time, especially when subjected to heat, pressure and humidity, thereby resulting in a loss of color fidelity.

Additionally, the low molecular weight of dye molecules can cause a high ability or mobility of the dye molecules in the toner resin resulting in undesirable bleeding of the dyes.

These colored toner particles are traditionally prepared by subjecting the above-mentioned components to intense mixing in an extruder at a temperature above the softening point of the film-forming polymer and then, by means of a milling process, bringing the resulting extrudate to a mean particle size of from 7 to 20 $\mu$m. The milling process to make particles this small leads to powders of irregular structure and broad particle size distribution, which results in significant material loss due to fines and oversized particles, plus less than ideal flow and charge behavior resulting from the irregular particle shape.

To make toner particles suitable for high resolution laser printers and copy machines, for example, 1200 dot per inch resolution, it is necessary to have particles with a size of 5 $\mu$m to meet these resolution requirements. Existing milling technology will make particles of this size only with considerable effort and waste, and the processing and economic problems mentioned above with irregular particle structure and broad particle size distribution are exacerbated as the size of the particle is reduced.

The breadth of a particle size distribution is characterized using not only the parameter $d_{50}$, for which just 50% of the particles are greater than or smaller than the value $d_{50}$, but also two further parameters: $d_{10}$ designates the particle size for which 10% of the particles are smaller than this value. Correspondingly, $d_{90}$ designates the particle size for which 90% of the particles are finer than the value $d_{90}$. To characterize the breadth of a particle size distribution it is usual to form a quotient which is referred to as the span and is calculated in accordance with the following formula: span = $(d_{90}-d_{10})/d_{50}$ . The relationship is thus: the smaller the span the narrower the particle size distribution. A powder comprising spheres identical in size would have a span of 0. For milled powders with a mean particle size $d_{50}$ of 10$\mu$m, a span of 3-4 is typically obtained.

It is also desirable, on the basis of economic considerations, to have processes for the manufacture of polymer particles which start with either monomeric components or oligomeric components, in which the polymer and the powder are produced in one process step. A process such as this which would produce a powder with the desired average particle size ($d_{50}$) with a narrow particle size distribution would be of even greater advantage. Some of the advantages would be a reduction in manufacturing cost (via combination of the polymerization and powder production steps, a reduction in the amount of waste, improvement in process yield, reduction in process time and improvement in energy efficiency.

It is also desirable to, at the same time, prepare a toner composition with excellent combination of mechanical and rheological properties, low melt viscosity and melt fluidity, and low fusing temperatures
There have therefore been no lack of attempts in the past to obtain colored toner particles with molecularly incorporated dyes.

Of particular interest with respect to the present invention are toner compositions to which are reacted a dye. For example, of particular interest with respect to the present invention are toner compositions which include a chromophoric resin ingredient. US-A- 3 699 135 describes a polymer dye prepared by the copolymerization of a silane with an anthraquinone containing two aliphatic hydroxyl groups. US-A- 4 375 357 describes water-soluble noncrystalline polymer block colorants composed of an organic polymer backbone with pendant azo chromophoric units.

Other prior art publications which describe polymeric dyes for toner compositions included US-A- 3 553 133, US-A- 4 645 727, US-A- 4 778 742, US-A- 5 200 290 and US-A-5 296 325, incorporated by reference.

In addition, WO 92/07913 describes powder colorant compositions consisting of semicrystalline polyesters having either copolymerized therein or added in situ during polymerization one or more colorant compounds. In this example, the colorants do not react with the polyester, the resulting resins are crystalline, which can lead to toner flow problems, and conventional milling and grinding techniques are not avoided.

The international patent application PCT/EP/98/ 00746 describes colored particles produced by the Non-AquaeousDispersion (NAD)-process for use in powder coatings, with fine (<50$\mu$m) particle size suitable for color mixing. Here the colorant (dye or pigment) is added to the resin during the NAD step. In this process no reactive colorant (one that chemically bonds with the resin) is employed; instead, this relies solely on physical blending. In addition, this procedure has a disadvantage that the colorant is added during the NAD process itself. In order to change color during production, the entire unit must be taken down for extensive cleaning. The current process has the advantage in that a colorless powder is produced in large vessels, and then the dye can be added later in smaller, easy-to-clean vessels.

The international patent applications PCT/EP/98/00747 and PCT/EP/98/00748 describe an NAD process and polyester compositions for production of clear and colored thermoset polyesters for powder coating applications. Here thermosets ionomers and a process that makes spherical particles <50$\mu$m with a span of <2.5 are described.

There have also been no lack of attempts in the past to obtain a reduction in the particle size by means of new technologies without incurring the above mentioned disadvantages in processability. The aim is, in general, to prepare particles with a near-ideal spherical form, since such powders exhibit substantially more favorable flow behavior than the irregular milled powders.

It has been attempted, for example, to prepare near-spherical particles by spraying polymer melts. The results presented in WO 92/00342 indicated, however, that this leads only to moderate success. The particles obtained by this technique, although having a smoother surface than milled powders, are still far removed from the ideal structure of the sphere.

Another method which has been investigated for the preparation of spherical particles is the spraying of polymers from a supercritical solution, as described, for example, in EP-A-0 661 091 or EP-A-0 792 999. This method too has substantial disadvantages. For example, in the cited applications it is stated that, owing to the sudden evaporation of the supercritical "solvent", a powder is obtained which has a porous structure. When these powders are employed to prepare films there is - in comparison with nonporous powders, an increased occurrence of bubble formation and thus of defects in the coating, since the porous structure means that a large amount of gas is trapped in the powder and must be removed in the process of film formation. The use of supercritical solvents, moreover, is technically complex since, for example, it requires operation under high pressure.

A method of producing spherical particles which differs in its principle is to produce a dispersion.

There has been no lack of attempts in the past to obtain polymer particles which can be used, for example, as binders in coating systems, by preparing them in dispersion. (Keith Barett, Dispersion Polymerization in Organic Media, John Wiley and Sons, London, 1975). GB-1 373 531, for example, describes the preparation of stable dispersions of polycondensation polymers, such as polyesters.

The possibility of using the polymer particles from nonaqueous dispersion processes, based in particular on polyesters, as a powder coating is addressed in DE-C-21 52 515. Here, an existing polymer is brought into dispersion at a temperature <200°C and, by addition pigments, in some cases at room temperature, a coloration is achieved. However, the resulting particles are described as substantially spherical "aggregates" of primary polymer particles and pigment particles. The isolation of material by spray drying leads to apparently to relatively large structures which it was necessary to convert back into a fine powder by mechanical means. Following the breaking up of the initially formed agglomerates, the stated particle size range is from about 2 to 50 $\mu$m, although there is no information whatsoever about the mean particle size or the particle size distribution.

The use, as described in DE-C-21 52 515, of a polymer which has already been condensed to high molecular weights as a starting product for dispersion preparation, moreover, has the following disadvantages; the already considerable viscosity of the polymers makes it difficult to achieve good division of the melt and to obtain a homogeneous particle size distribution.

US 5 312 704 describes a toner composition comprised of pigment particles, and a resin comprised of a monomodal polymer resin or blends. This still suffers from issues described above in the extrusion blending followed by milling process, plus the dispersity of pigment particles as opposed to dyes. US patents 5 660 963, and 5 556 732 all describe polyester resins blended with colorants in a melt extruder, followed by milling.

US-A- 5 346 798 describes a suspension polymerization method to make toner particles. This is an aqueous dispersion method used to make addition polymers, and is not applicable to the non-aqueous dispersion method described here to make condensation polymer particles. It also does not discuss chemically or ionically bonding a chromophore to the polymer.

US-A- 5370963 and US-A- 5525452 describe a toner emulsion aggregation process which disperses a pigment, charge control agent and surfactant in water, followed by shearing in at high speeds a polymeric latex. This is limited to latexes, and uses pigments instead of the dyes described here.

Accordingly, it is an object of this invention to provide polymer particles useful for toner compositions consisting of transparent or homogeneously colored, spherical polyester particles, having a very low particle size and a narrow particle size distribution, in which dyes are chemically (ionically or covalently) bound to a functionalized polyester. Toner compositions comprising the instant polymer particles have a superior combination of properties for electrophtographic and direct printing imaging systems, especially high resolution imaging systems. It is also an object of this invention to provide for a process for the production of the instant particles.

Other objects and advantages of the present invention shall become apparent from the accompanying description and examples.

Description of the invention:

The present invention achieves this object and provides homogeneously colored, spherical, non-porous amorphous polyester particles which have a mean particle size of between 2 and 15$\mu$m, preferably 3 and 12$\mu$m, especially preferred 5 and 10 $\mu$m and a particle size distribution with a span $(d_{90}-d_{10}/d_{50})<1.5$, preferably < 1.2 and more preferably <1,0 which can be used for application in toners and suitable for 300 dpi (dots per inch) electrophotography resolution. More specifically these compositions which have been developed have utility in use for high resolution electophotography (direct and indirect types), where conventional toner materials are too large to meet high resolution requirements. The invention also provides homogeneously colored, spherical, non-porous amorphous polyester particles which have a mean particle size of between 2 and 10$\mu$m, preferably 7$\mu$m and a particle size distribution $(d_{90}-d_{10}/d_{50})<1.5$ with utility for 600 dpi resolution, and more preferably, provides homogeneously colored, spherical, non-porous amorphous polyester particles which have a mean particle size of between 2 and 6$\mu$m, preferably 5$\mu$m and a particle size distribution $(d_{90}-d_{10}/d_{50})<1.5$, which are suitable for 1200 dpi resolution. The instant process is unique in its ability to make spherical particles of this shape, size and distribution suitable for these high resolution applications.

The instant polyester particles usually have a average number molecular weight Mn in the range of 1000 to 20,000, preferably 2000 to 10,000.

The novel, spherical polyester particles are prepared by:

A. dispersing the starting materials for the polyester binder in the molten state in an inert high-boiling heat transfer medium at a temperature which is at least as high as the softening temperature of the starting materials, in the presence of at least one organic polymeric dispersion stabilizer, or slowly adding the starting materials in the molten state to a heated mixture of heat transfer medium and dispersant, at a temperature at least as high as the temperature of the molten starting materials, and

B. then heating the reaction mixture to a temperature in the range from 120 - 280°C, with simultaneous removal of the condensation byproducts, until the polyester has the desired molecular weight, and

C. subsequently, at a temperature of from 25 to 220°C addition of additives, if desired, such as charge control agents or flow control agents, and

D. thereafter cooling reaction mixture to within the range which is below the softening temperature of the polyester and separating off the resulting colorless spherical polyester particles ( optionally the additives can be added after cooling the reaction mixture below the softening point of the polymer), and washing off the residual heat transfer medium with an inert, volatile solvent which may be easily removed in a drying step, and optionally

E. dispersing the polyester powder in water, either with or without the presence of a surfactant, and adding a cationic or other reactive dye of the correct color and reactivity, and allowing the dye to react with the polyester until the correct color intensity has been achieved. At this point also either charge control agents or flow control agents or other additives may be added. Step E may be conducted either at room temperature or at elevated temperature and

F. finally filtering off and drying the spherical homogeneously colored polyester particles.

The starting materials employed are preferably oligoesters having viscosity of less than 1000 mPas (measured at 200°C), in particular <500mPas, which comprise units of the following formulae:

70 to 100 mol% of structural groups of formula -CO-A1-CO- (1)
0 to 30 mol% of structural groups of the formula -CO-A2-CO- (2)
0 to 50 mol% of structural groups of the formula -O-A3-CO- (3)
0.1 to 10 mol% of structural groups of the formula -CO-A4-CO- (2), preferably 1 to 5 mol%, more preferably 3 mol%.
and diol structural groups of the formula -O-D1-O- (5), O-D2-O- (6), and O-D3-O-(7) in which
A1 is 1,4-phenylene-, 2,6-naphthylene- or 4,4'-biphenylene radicals, which can be present individually or in any desired mixture,
A2 is aromatic radicals other than A1 or araliphatic radicals having 5 to 16, preferably 6 to 12, carbon atoms or cyclic or acyclic aliphatic radicals having 2 to 10 carbon atoms, preferably 4 to 8 carbon atoms,
A3 is aromatic radicals having 5 to 12, preferably 6 to 10, carbon atoms,
A4 is aromatic radicals having an anionic substituent, for instance such as sulfonate, phosphonate;
D1 is alkylene or polymethylene groups having 2 to 4 carbon atoms or cycloalkane or dimethylenecycloalkane groups having 6 to 10 carbon atoms and,
D2 is alkylene or polymethylene groups having 3 to 4 carbon atoms or cycloalkane or dimethylenecycloalkane groups having 6 to 10 carbon atoms other than D1, or bis-phenol A type moieties, or straight-chain or branched alkanediyl groups having 3 to 15, preferably 4 to 8, carbon atoms or radicals of the formula -(C2H4-O)m-C2H4-, in which m is an integer from 1 to 40, where m is preferably 1 or 2 for contents of up to 20 mol% and groups where m=10 to 40 are preferably present only in contents of less than 5 mol%.
D3 is alkylene or polymethylene groups having 2 to 4 carbon atoms or cycloalkane or dimethylenecycloalkane groups having 6 to 10 carbon atoms, or straight-chain or branched alkanediyl groups having 3 to 15, preferably 4 to 8, carbon atoms or radicals of the formula -(C2H4-O)m-C2H4-, in which m is an integer from 1 to 40, where m is preferably 1 or 2 for contents of up to 20 mol% and groups where m=10 to 40 are preferably present only in contents of less than 5 mol%. These groups have an anionic substituent, for instance such as sulfonate, phosphonate,
The aromatic radicals A2 and A3 in their turn can also carry one or two substituents. Preferably, substituted radicals A2 and A3 carry only one substituent. Particulary suitable substituents are alkyl having 1 to 4 carbon atoms, alkoxy having 1 to 4 carbon atoms, and halide, such as chlorine.

Preferably, in accordance with the above statement, the dicarboxylic acid-diol precondensate employed as the starting material for the specific embodiment of the process according to the invention is a reaction product of one or more dicarboxylic acids of the formula HOOC-A1-COOH and one or more dicarboxylic acids of the formula HOOC-A4-COOH and, if appropriate, one or more dicarboxylic acids of the formula HOOC-A2-COOH or hydroxycarboxylic acids of the formula HO-A3-COOH, or functional derivatives of such di- or hydroxycarboxylic acids, with one or more diols of the formula HO-D1-OH, and if appropriate one or more diols of the formula HO-D2-OH, in which, in addition to the esters formed from the starting materials, lower polycondensations products (oligomers) and as a rule small amounts of the starting materials are present.

Less preferably, in accordance with the above statement, the dicarboxylic acid-diol precondensate employed as the starting material for the specific embodiment of the process according to the invention is a reaction product of one or more dicarboxylic acids of the formula HOOC-A1-COOH and, if appropriate, one or more dicarboxylic acids of the formula HOOC-A2-COOH or hydroxycarboxylic acids of the formula HO-A3-COOH, or functional derivatives of such di- or hydroxycarboxylic acids, with one or more diols of the formula HO-D1-OH and HO-D3-OH, and if appropriate one or more diols of the formula HO-D2-OH, in which, in addition to the esters formed from the starting materials, lower polycondensations products (oligomers) and as a rule small amounts of the starting materials are present.

It is preferred first of all to prepare oligoesters of the above described composition in the melt by heating the carboxylic acid components, such as terephthalic, isophthalic, or 5-sulfonyl isophthalic acid, to name just a few, in the form of the acid or as low molecular mass alkyl esters, together with the diol components, for example ethylene glycol, 1,2-propanediol, 2-methyl-1,3-propanediol, neopentylglycol or bis-hydroxymethylcyclohexane, in the melt in the presence of a transesterification catalyst, such as compounds of manganese, zinc, tin, antimony or titanium, (such as manganese acetate), until the majority of the condensation products water or the lower alkanols, respectively, have been distilled off. In the course of this operation, however, no significant increase is observed in the viscosity of the melt. At 200°C, the viscosity is still <1000 mPas.

It is also possible to make the above oligoesters in the presence of additives such as charge control agents or flow control agents, which are admixed to the monomer mixture before the melt condensation.

An oligomer mixture of this kind can be converted, for example, into a novel dispersion directly at elevated temperature by combination with heat transfer oil and dispersant. This combination may be made preferably the gradual addition of the molten precondensate to a mixture of heated heat transfer oil and dispersant. However, it is possible to cool the oligomer mixture for the purpose of storage, which would then be heated and melted before mixing with the heat transfer medium containing dispersant. (This is taught PCT/EP/98/00748- the disadvantage here is that it leads to a broader span, in the range of 2.5) It is also useful to add a molten mixture of oligoesters and dispersant to a heated, stirred heat transfer medium. The dispersant can be dosed partly to the molten oligoesters and/or at the heat transfer medium.

Less preferably, it is also possible to carry out the preparation of the oligomers in the actual dispersion, meaning the reaction can be conducted starting from monomers, without going through the initial melt condensation to form the above oligoesters.

In a practical embodiment of the novel process the starting materials, preferably as an oligomer mixture, are added in step (A) in the molten state to a heated, stirred mixture of an inert, high boiling heat transfer medium and at least one organic dispersion stabilizer or dispersion stabilizer mixture. The temperature of the molten oligomeric mixture is preferably in the range of 150 - 200°C, but must be as least as high as the softening temperature of the starting materials, judiciously in the range of from 120 to 280°C. The heat transfer media will also be preheated, typically at or slightly above the temperature of the added molten oligomers, and will be stirred rapidly during the entire process.

Heat transfer media (dispersion media) which have proven particularly appropriate are aliphatic heat transfer oils having a boiling point in the range above 140 to 380°C. Such heat transfer oils are preferably, in the technical sense, free from aromatic structural groups; in other words, they contain not more than 2% by weight, more preferably not more than 1% by weight, of aromatic constituents.

Owing to the low polarity of these oils, which are marketed, for example, by Exxon Chemical under the trade names ®Isopar, ®Exxol, or ®Norpar, the polyesters are essentially not swollen. This is a problem which occurs in some cases for aromatic oils, which in principle are equally suitable for the dispersion process.

General rules for the design of appropriate polymeric dispersion stabilizers are given by Keith Barett in "Dispersion Polymerization in Organic Media", John Wiley and Sons, London, 1975 on pages 45 to 110. Principal requirements are solubility of the polymeric dispersion stabilizer in the dispersion medium used, and polar or reactive groups which allow strong interaction with the particles that are to be dispersed.

For the novel process it is preferred to employ amphiphilic copolymers, preferably organic amphiphilic compounds,or surface-modified inorganic compounds. Examples of the later are phyllosilicates surfaced-modified with trialkylammonium salts, especially bentonite surface-modified with trialkylammonium salts, or amphiphilic copolymers comprising a polar polymer unit, for example poly-N-vinyl pyrrolidone, and an apolar polymer unit, for example long-chain $\alpha$-olefins such as 1-eicosene.

Such amphiphilic copolymers are marketed by the company ISP Global under the tradename ®Antaron and have been found particularly appropriate. As described, for example, in EP-B-0 392 285, Antaron has already been employed successfully at relatively low temperatures for stabilizing polyurethane dispersions. It has been found that Antaron can be also employed with advantage, however, at temperatures up to 300°C and results in excellent stability of the dispersions.

The content of the dispersion stabilizer is, in accordance with the invention, in the range from 0.1 to 6% by weight based on the polyester, preferably in the range of from 0.3 to 4% by weight and, in particular, in the range of from 0.5 to 3% by weight in order to obtain particles having the desired size.

In a subsequent step (b) the reaction mixture is heated further to a temperature in the range of from 120 to 280°C, in particular from 200 to 250°C, with the resulting condensation byproducts being removed in parallel. The temperature is maintained until the polyester has reached the desired molecular weight, which is usually in the range of Mn=1000 to 20,000, preferably in the range of 2000 to 10,000. Of decisive importance for the molecular weight is the duration of the reaction, which can be monitored by taking samples and the amount of separated distillate.

Following the conclusion of the condensation in step (b), it is also possible, in order to optimize the charge behavior of the toner particle or the coating properties of the polyester - as is desirable for optimum surface quality or transparency- to add additives such as charge control agents, flow7 assistants or devolatilization assistants, for example. This is done by cooling the mixture to 25 to 200°C, and adding the desired additives at the same time as stirring the reaction mixture. These additives can be added as described above without impacting negatively on the dispersion stability or particle formulation.

The temperature of the reaction mixture is reduced to a temperature which is below the softening temperature of the polyester, preferably <60°C. In this process the polyester is obtained in powder form. The resulting colorless, spherical polyester particles are separated off from the supernatant reaction solution, washed with a volatile solvent, for instance an aliphatic hydrocarbon, such as hexane, isohexane, cyclohexane, pentane or butane, to remove excess heat transfer oil, then dried, preferably in a vacuum tumble dryer, at a temperature below the softening point of the polyester.

The polyester particles obtained in step D are transparent and can be prepared with any desired molecular weight, for example in the range of from Mn=1000 to Mn=20,000, but even as high as Mn= 50,000. The intrinsic viscosity (IV) of the obtained polyesters is preferably from 0.1 to 0.3 dl/g. The yield is >95%, in general even greater than >98%, especially if the reaction is conducted on a relatively large scale. There are virtually no instances of adhesion in the reactor which could lead to a reduction in yield.

By means of the novel process it is possible to obtain spherical polyester particles having a mean particle size ($d_{50}$) of from 2 to 15 $\mu$m. In particular it is possible to obtain particles with a size of 9 to 10 $\mu$m for 300 dpi resolution applications, or 7 $\mu$m for 600 dpi applications and 5 $\mu$m for 1200 dpi applications, and a particle size distribution that shows a span ($d_{90}$-$d_{10}$)/$d_{50}$ of <1.5, preferably <1.3 and more preferably <1,0.

The particles are then (step E) dispersed in water and a cationic dye of the desired color is added to the water. A surfactant may or may not be used during this step. The dye addition process may occur at room temperature, or may be conducted at elevated temperatures, including 100°C or greater. If the dye addition process is conducted at a temperature above the softening point of the polymer, it is preferable that a surfactant be used to prevent agglomeration of the particles. The used dyes are basically of a cationic type, for instance such as Astrazon basic yellow or astrazon basic cyan and astrazon basic violett. However, all other kinds of cationic dyes may be employed as well for the instant process.

At this point, an appropriate charge control agent may be added to the powder.

This process is advantageous over adding the color agent during part C, in that a separate colorant reactor may be used, thus facilitating cleaning and color change over, and leading to improved productivity and process economics.

Because of their small size (2-15 $\mu$m), spherical shape, and narrow particle size distribution, these particles are particularly suited for use in application for toners and use in electophotography and direct printing. More specifically these compositions have utility in use for high resolution electophotography, where conventional toner materials are too large to meet high resolution requirements. The particular application where these materials are especially suited is for high resolution electrophotography where resolution requirements of 1200 dots per inch are required.

Examples:

Characterization:

Inherent Viscosity:

Measured at 25°C under 2,0 % concentration (weight/volume) in N-methyl pyrrolidone containing 0,06 % of lithium bromide.

Particle size:

Either dried powder or as-polymerized dispersion was well mixed with Heptane by ultrasonic then evaluated with laser light scattering method using a Malvern Mastersizer® at room temperature.

Glass transition temperature:

Evaluated on the second heating profile with a differential scanning calorimeter (DSC) using 10°C/min. heating rate.

Residual oil in dried powder:

Dried powder was dissolved into organic solvent, e.g. methylene chloride, then measured with gas chromatography. A peak caused by residual oil was calibrated with internal standard.

Residual washing solvent:

Evaluated by thermal gravity analysis (TGA) heating from 35°C to 300°C with 10°C/min. under nitrogen. Weight loss at 150°C from 50°C was calculated as an amount of residual solvent.

Preparation of polymer particles:

Example 1 (standard NAD polymerization from monomers)

Into an upper 1,5 liter stainless steel reactor equipped with an agitator and a 10 cm-vigreux column was added dimethyl terephthalate (416,2 gram), dimethyl-5-sulfonyl isophthalate sodium salt (19,6 gram), ethylene glycol (164,6 gram), 2-methyl-1,3-propandiol (59,7 gram), and dibuthyltinoxude (0,135 gram). The mixture was heated up to 150°C and held for 20 minutes under nitrogen blanket then heated again to 200°C in 210 minutes with removing methanol which was the byproduct from the ester inter-exchange reaction between dimethylester and diols. Kept at the temperature for 60 minutes to obtain "precondensate" and a 101,2 gram of distillate.

Into another 1,5 liter stainless steel reactor equipped with a 6-blade-type agitator was added isoparaffinic oils, Isopar® P (150 gram) and Isopar® L (300 gram) provided by Exxon Chemical Europe Inc., and vinylpyrrolidone copolymer, Antaron® V220 (13,5 gram) provided by ISP. They were held at 190°C to be added the prepared precondensate in the upper reactor.

The precondensate was slowly transferred within 7 minutes under high-speed stirring (1000 - 1800 rpm) from the upper reactor to the lower reactor through a preheated stainless steel tube equipped with a ball valve. The end of the stainless steel tube was located just above the surface of the isoparaffinic oil in the lower reactor. The molten precondensate reached directly to the oil-surface. The resulting dispersion was kept for another 15 minutes at 190°C.

Then the dispersion was heated up to 202°C in 30 minutes under nitrogen flow of 10 - 20 liter per hour and the constant stirring. The isoparaffinic oil which was a dispersion medium in this stage began to boil at 194°C. The vapor was introduced into a phase-separator through a water-cooler where the distilled ethylene glycol was separated from the oil. The phase-separator held ca. 10 ml of the distilled oil and the rest returned to the dispersion from the top of the lower reactor through the glass tube where the running oil touched the vapor mixture. The dispersion was heated further up to 207°C in 120 minutes removing ethylene glycol. A 67,8 gram of distillate was finally collected through the phase-separator. Then the dispersion was cooled down to 40°C and discharged.

The dispersion was filtered with polyester taffeta whose pore size was about 40 micron. The filtered powder cake was washed three times with a 900 ml of iso-hexane then dried at 40°C under vacuum overnight. A 407 gram of fine white powder was obtained. Particle size (volume-average size): 6,1 micron, standard deviation, 3,3 micron, I.V., 0,15 dl/g. The powder contained 1,9 % of residual oil and 1,5 % of isohexane.

Example 2 (standard NAD polymerization from precondensate)

Into an 250 liter stainless steel reactor equipped with an agitator and a packed column was added dimethyl terephthalate (161,9 Kg), dimethyl-5-sulfonyl isophthalate sodium salt (7,6 Kg), ethylene glycol (64,0 Kg), 2-methyl-1,3-propandiol (23,2 Kg), and dibuthyltinoxide (52,5 gram). The mixture was heated up to 150°C and held for 30 minutes under nitrogen blanket then heated again to 200°C in 270 minutes with removing methanol which was the byproduct from the ester inter-exchange reaction between dimethylester and diols. Kept at the temperature for 90 minutes to get 31,4 Kg of distillate. The mixture was cooled down to 150°C and discharged from the reactor and cooled further. About 200 Kg of wary white solid obtained (Precondensate A).

Into a 1,5 liter stainless steel reactor equipped with a 6-blade-type agitator was added isoparaffinic oils, Isopar® P (150 gram) and Isopar® L (300 gram) provided by Exxon Chemical Europe Inc., and vinylpyrrolidone copolymer, Antaron® V220 (6,3 gram) provided by ISP. They were held at 190°C.

A 518,6 gram of solid Precondensate A was weighted in a glass flask and heated up to 190°C. It melted above 140°C and became water-like thin liquid at 190°C. The molted Precondensate A was slowly added into the 1,5 liter reactor containing oils and Antaron for 7 minutes under high-speed stirring (1800 rpm) through a preheated glass tube with a control valve. The molten precondensate reached directly to the oil-surface. The resulting dispersion was kept for another 10 minutes at 190°C.

Then the dispersion was heated up to 204°C in 30 minutes under nitrogen flow of 10 liter per hour and the constant stirring. The isoparaffinic oil which was a dispersion medium in this stage began to boil at 194°C. The vapor was introduced into a phase-separator through a water-cooler where the distilled ethylene glycol was separated from the oil. The phase-separator held ca. 10 ml of the distilled oil and the rest returned to the dispersion from the top of the reactor through the glass tube where the running oil touched the vapor mixture. The dispersion was heated further up to 207°C in 120 minutes removing ethylene glycol. A 63,2 gram of distillate was finally collected through the phase-separator. Then the dispersion was cooled down to 50°C and discharged.

The dispersion was filtered with polyester taffeta with pore size of about 40 micron. The filtered powder cake was washed three times with a 900 ml of iso-hexane then dried at 40°C under vacuum overnight. A 357 gram of fine white powder was obtained. Particle size (volume-average size) 7,5 micron, standard deviation, 3,3 micron, I.V., 0,16 dl/g. The dried powder contained 1,6 % of residual oil and 1,5 % of isohexane.

Example 3 (NAD polymerization from precondensate under vacuum)

Into a 1,5 liter stainless steel reactor equipped with a 6-blade-type agitator was added isoparaffinic oils, Isopar$^®$ P (450 gram) provided by Exxon Chemical Europe Inc., and vinylpyrrolidone copolymer, Antaron$^®$ V220 (10,35 gram) provided by ISP. They were held at 190°C.

A 518,6 gram of solid Precondensate A prepared in Example 2 was weighted in a glass flask and heated up to 190°C. It melted above 140°C and became water-like thin liquid at 190°C. The molten Precondensate A was slowly added into the 1,5 liter reactor containing oils and Antaron for 7 minutes under high-speed stirring (1300 rpm) through a preheated glass tube with a control valve. The molten precondensate reached directly to the oil-surface. The resulting dispersion was kept for another 10 minutes at 190°C.

Then the dispersion was heated up to 220°C in 38 minutes under nitrogen flow of 10 liter per hour and the constant stirring. Ethylene glycol distilled above 210°C. After the reaction temperature reached to 220°C, the reaction pressure was reduced carefully from ambient pressure to 280 mbar for 48 minutes to prevent oil from bumping. The reaction temperature decreased slowly to 212°C. The isoparaffinic oil boiled up under 470 mbar. Its vapor was introduced into a phase-separator through a water-cooler where the distilled ethylene glycol was separated from the oil. The phase-separator held ca. 10 ml of the distilled oil and the rest returned to the dispersion from the top of the reactor through the glass tube where the running oil touched the vapor mixture. The dispersion was held under the pressure of 260 - 280 mbar at 210°C - 212°C for another 40 minutes with removing ethylene glycol. A 45 gram of distillate was finally collected through the phase-separator. Then the dispersion was cooled down to 50°C and discharged.

The dispersion was filtered with polyester taffeta with pore size of about 40 micron. The filtered powder cake was washed three times with a 900 ml of iso-hexane then dried at 40°C under vacuum overnight. A 397 gram of fine white powder was obtained. Particle size (volume-average size) : 5,6 micron, standard deviation, 4,6 micron, I.V., 0,18 dl/g. The dried powder contained 1,3 % of residual oil and 1,0 % of isohexane.

Example 4 (NAD polymerization from precondensate with 100% Antaron in the precondensate)

Into an 250 liter stainless steel reactor equipped with an agitator and a packed column was added dimethyl terephthalate (161,9 Kg), dimethyl-5-sulfonyl isophthalate sodium salt (7,6 Kg), ethylene glycol (64,0 Kg), 2-methyl-1,3-propandiol (23,2 Kg), and dibutyltinoxide (52,5 gram). The mixture was heated up to 150°C and held for 30 minutes under nitrogen blanket then heated again to 200°C in 270 minutes with removing methanol which was the byproduct from the ester inter-exchange reaction between dimethylester and diols. Kept at the temperature for 90 minutes to get 31,4 Kg of distillate. The mixture was cooled down to 150°C and discharged from the reactor and cooled further. About 200 Kg of waxy white solid obtained (Precondensate A).

Into a 1,5 liter stainless steel main reactor equipped with a 6-blade-type agitator was added isoparaffinic oils, Isopar$^®$ P (150 gram) and Isopar$^®$ L (300 gram) provided by Exxon Chemical Europe Inc.. They were held at 190°C.

A 518,6 gram of solid Precondensate A was weighted in a upper 1,5 liter stainless steel reactor together with Antaron$^®$ (13,5 gram) and heated up to 190°C. It melted above 140°C and became water-like thin liquid at 190°C. The molted Precondensate A containing Antaron was slowly added into the 1,5 liter reactor within 7 minutes under high-speed stirring (1000 rpm) through a preheated metal tube with a control valve. The molten precondensate reached directly to the oil-surface. The resulting dispersion was kept for another 10 minutes at 190°C. Then the dispersion was heated up to 210°C in 30 minutes under nitrogen flow of 25 liter per hour and the constant stirring. The isoparaffinic oil which was a dispersion medium in this stage began to boil at 194°C. The vapor was introduced into a phase-separator through a water-cooler where the distilled ethylene glycol was separated from the oil. The phase-separator held ca. 10 ml of the distilled oil and the rest returned to the dispersion from the top of the reactor through the glass tube where the running oil touched the vapor mixture. The dispersion was kept at 210°C for 120 minutes removing ethylene glycol. A 48,2 gram of distillate was finally collected through the phase-separator. Then the dispersion was cooled down to ambient temperature and discharged.

The dispersion was filtered with polyester taffeta with pore size of about 40 micron. The filtered powder cake was washed three times with a 900 ml of iso-hexane then dried at 40°C under vacuum overnight. A 459 gram of fine white powder was obtained with volume-average size, 8 micron, span 1,42 and I.V., 0,08 dl/g. The dried powder contained 2,7 % of residual oil and 1,6 % of isohexane.

EP 0 943 658 A1

Table 1 :

Different toner compositions and comparison of their melt viscosities

| composition | terephthalic acid | isophthalic acid | sulfoisophthalic acid | 1,2-propanediol | 1,3-propanediol | ethyleneglyglycol |
|---|---|---|---|---|---|---|
| toner - 5 | 97 | | 3 | | 30 | 70 |
| toner - 9 | 47 | 50 | 3 | 100 | | |

**melt viscosity toner-5 vs. toner-9**

Dyeing of polymer particles:

Two general dyeing procedures were developed:

1. Dyeing below the glass transition temperature of the polymer particles: A water bath was adjusted to a pH of 4-5 by using an acetate buffer. At 20°C 5% of polymer powder and 1% of Antrazon Yellow 7GLL were added. This mixture is stirred at 40°C until the required optical density of the colored particles of 1,5 was reached. This was achieved in between 12-15 hours. Subsequently the polymer particles were filtered of an washed with cold water.

2. Dyeing above the glass transition temperature of the polymer particles: A water bath was adjusted to a pH of 4-5 by using an acetate buffer. At 20°C 5% of polymer powder, 0,2% of Antrazon Yellow 7GLL and 0,1% Genapol 26-L-80 were added. Under constant stirring this mixture is heated to 65°C and kept for 10 minutes at this temperature. Then the bath is cooled down to ambient temperature, the particles were filtered off and washed with cool water.

**Claims**

1. Polyester particles having a mean particle size of between 2 to 15 $\mu$m, which spherical, having a particle size distribution with a span (=d90-d10/d50) $\leq$ 1.5.

2. Polyester particles as claimed in claim 1, which have an average number molecular weight (Mn) in the range from 1000 to 20,000.

3. Polyester particles as claimed in claim 1 or 2, which are homogeneously colored and wherein a dye is chemically bond to the functionalized polyester.

4. Polyester particles as claimed in at least one of claims 1 to 3, which can be used for application toners compositions in electrophotographic imaging and direct printing systems.

5. Polyester particles as claimed in at least one of claims 1 to 4, which comprise units of the following formulae

70 to 100 mol% of structural groups of formula -CO-A1-CO- (1)
0 to 30 mol% of structural groups of the formula -CO-A2-CO- (2)
0 to 50 mol% of structural groups of the formula -O-A3-CO- (3)
0.1 to 10 mol% of structural groups of the formula -CO-A4-CO- (4)
and diol structural groups of the formula -O-D1-O- (5), O-D2-O- (6), and O-D3-O- (7) in which
A1 is 1,4-phenylene-, 2,6-naphthylene- or 4,4'-biphenylene radicals, which can be present individually or in any desired mixture,
A2 is aromatic radicals other than A1 or araliphatic radicals having 5 to 16, preferably 6 to 12, carbon atoms or cyclic or acrylic aliphatic radicals having 2 to 10 carbon atoms, preferably 4 to 8 carbon atoms,
A3 is aromatic radicals having 5 to 12, preferably 6 to 10, carbon atoms,
A4 is aromatic radicals having an anionic substituent, such as sulfonate, phosphonate,.
D1 is alkylene or polymethylene groups having 2 to 4 carbon atoms or cycloalkane or dimethylenecycloalkane groups having 6 to 10 carbon atoms and,
D2 is alkylene or polymethylene groups having 3 to 4 carbon atoms or cycloalkane or dimethylenecycloalkane groups having 6 to 10 carbon atoms other than D1, or bis-phenol A type moieties, or straight-chain or branched alkanediyl groups having 3 to 15, preferably 4 to 8, carbon atoms or radicals of the formula -(C2H4-O)m-C2H4-, in which m is an integer from 1 to 40, where m is preferably 1 or 2 for contents of up to 20 mol% and groups where m=10 to 40 are preferably present only in contents of less than 5 mol%.
D3 is alkylene or polymethylene groups having 2 to 4 carbon atoms or cycloalkane or dimethylenecycloalkane groups having 6 to 10 carbon atoms, or straight-chain or branched alkanediyl groups having 3 to 15, preferably 4 to 8, carbon atoms or radicals of the formula -(C2H4-O)m-C2H4-, in which m is an integer from 1 to 40, where m is preferably 1 or 2 for contents of up to 20 mol% and groups where m=10 to 40 are preferably present only in contents of less than 5 mol%. These groups have an anionic substituent, such as sulfonate, phosphonate,

7. A process for preparing spherical, dyable polyester particles according to claim 1, comprising the following steps:

A. dispersing the starting materials for a polyester binder in the molten state in an inert high-boiling heat transfer medium at a temperature which is at least as high as the softening temperature of the starting materials, in the presence of at least one polymeric dispersion stabilizer, and

B. then heating of the reaction mixture to a temperature in the range from 120 to 280°C, with simultaneous removal of the condensation byproducts, until the polyester has the desired molecular weight;

C. subsequent addition additives, if desired, at a temperature in the range from 25 to 220°C;

D. thereafter cooling the reaction mixture to a temperature within a range which is below the softening temperature of the polyester and separating off of the resulting colorless spherical polyester particles and washing off the residual heat transfer medium with an inert, volatile solvent and optionally

E. dispersing the polyester particles in water, either with or without the presence of a surfactant, and adding a cationic or other reactive dye of the desired color and allowing the dye to react with the polyester until the correct color intensity has been achieved;

F. filtering off and drying the resulting spherical homogeneously colored polyester particles

**8.** The process as claimed in claim 7, wherein as starting materials compounds are employed which comprise units of the following formulae

70 to 100 mol% of structural groups of formula -CO-A1-CO- (1)
0 to 30 mol% of structural groups of the formula -CO-A2-CO- (2)
0 to 50 mol% of structural groups of the formula -O-A3-CO- (3)
0.1 to 10 mol% of structural groups of the formula -CO-A4-CO- (2), preferably 1 to 5 mol%, more preferably 3 mol%.
and diol structural groups of the formula -O-D1-O- (5), O-D2-O- (6), and O-D3-O- (7) in which
A1 is 1,4-phenylene-, 2,6-naphthylene- or 4,4'-biphenylene radicals, which can be present individually or in any desired mixture,
A2 is aromatic radicals other than A1 or araliphatic radicals having 5 to 16, preferably 6 to 12, carbon atoms or cyclic or acyclic aliphatic radicals having 2 to 10 carbon atoms, preferably 4 to 8 carbon atoms,
A3 is aromatic radicals having 5 to 12, preferably 6 to 10, carbon atoms,
A4 is aromatic radicals having an anionic substituent, such as sulfonate, phosphonate,
D1 is alkylene or polymethylene groups having 2 to 4 carbon atoms or cycloalkane or dimethylenecycloalkane groups having 6 to 10 carbon atoms and,
D2 is alkylene or polymethylene groups having 3 to 4 carbon atoms or cycloalkane or dimethylenecycloalkane groups having 6 to 10 carbon atoms other than D1, or bis-phenol A type moieties, or straight-chain or branched alkanediyl groups having 3 to 15, preferably 4 to 8, carbon atoms or radicals of the formula $-(C2H4-O)m-C2H4-$, in which m is an integer from 1 to 40, where m is preferably 1 or 2 for contents of up to 20 mol% and groups where m=10 to 40 are preferably present only in contents of less than 5 mol%.
D3 is alkylene or polymethylene groups having 2 to 4 carbon atoms or cycloalkane or dimethylenecycloalkane groups having 6 to 10 carbon atoms, or straight-chain or branched alkanediyl groups having 3 to 15, preferably 4 to 8, carbon atoms or radicals of the formula $-(C2H4-O)m-C2H4-$, in which m is an integer from 1 to 40, where m is preferably 1 or 2 for contents of up to 20 mol% and groups where m=10 to 40 are preferably present only in contents of less than 5 mol%. These groups have an anionic substituent, such as sulfonate, phosphonate,

**9.** The process as claimed in claim 7 or 8, wherein the resulting polyester particals have a mean particle size of 5 to 12 $\mu$m.

**10.** The process as claimed in at least one of claims 7 to 9, wherein the heat transfer medium used has a boiling point in the range from 140 to 380/C.

**11.** The process as claimed in at least one of claims 7 to 10, wherein an organic amphiphilic copolymer is employed as dispersion stabilizer.

**12.** The process as claimed in at least one of claims 7 to 11, wherein the content of the dispersion stabilizer is in the range from 0.1 to 6 % by weight, based on the polyester.

**13.** The process as claimed in at least one of claims 7 to 12, wherein the polyesters obtained have an average number molecular weight Mn in the range from 1000 to 20,000.

**14.** The process as claimed in at least one of claims 7 to 13, wherein the polyester particles obtained have a particle size distribution with a span (d90-d10/d50) of $\leq$ 1.3.

**15.** Polyester particles obtainable by a process according to at least one of the claims 7 to 14 for the application in toner compositions in electrophotographic and direct printing systems.

**European Patent Office**

## EUROPEAN SEARCH REPORT

Application Number

EP 98 10 5001

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 324 612 A (MAEDA SATOSHI ET AL) 28 June 1994<br>* the whole document * | 1-5,7-15 | C08L67/00<br>C08L67/02<br>G03G9/087 |
| X | WO 92 10551 A (BASF LACKE & FARBEN) 25 June 1992<br>* page 12, line 18 - line 25; examples * | 1 | |
| X | PATENT ABSTRACTS OF JAPAN<br>vol. 017, no. 478 (C-1104), 31 August 1993<br>& JP 05 117402 A (MINOLTA CAMERA CO LTD), 14 May 1993,<br>* abstract * | 1 | |
| X | EP 0 751 166 A (HOECHST TREVIRA GMBH & CO KG) 2 January 1997<br>* page 4, line 39 - page 6, line 6 * | 7-15 | |
| X | EP 0 822 460 A (CANON KK) 4 February 1998<br>* page 12, line 19 - line 55 *<br>* page 7, line 53 - line 57 *<br>* example 1 * | 15 | TECHNICAL FIELDS SEARCHED (Int.Cl.6)<br><br>C08L<br>G03G |

The present search report has been drawn up for all claims

| Place of search | Date of completion of the search | Examiner |
|---|---|---|
| MUNICH | 14 August 1998 | Andriollo, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 98 10 5001

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-1998

| Patent document cited in search report | | Publication date | Patent family member(s) | | Publication date |
|---|---|---|---|---|---|
| US 5324612 | A | 28-06-1994 | JP | 5100479 A | 23-04-1993 |
| | | | JP | 5119523 A | 18-05-1993 |
| | | | DE | 4228157 A | 15-04-1993 |
| WO 9210551 | A | 25-06-1992 | DE | 4038681 A | 11-06-1992 |
| | | | AT | 117713 T | 15-02-1995 |
| | | | CA | 2096643 A | 06-06-1992 |
| | | | CA | 2154863 A | 06-06-1992 |
| | | | DE | 59104444 D | 09-03-1995 |
| | | | DK | 560792 T | 29-05-1995 |
| | | | EP | 0560792 A | 22-09-1993 |
| | | | ES | 2070520 T | 01-06-1995 |
| | | | IE | 65595 B | 01-11-1995 |
| | | | PT | 99685 A | 30-11-1992 |
| EP 0751166 | A | 02-01-1997 | DE | 19523261 A | 09-01-1997 |
| | | | JP | 9012695 A | 14-01-1997 |
| | | | US | 5736621 A | 07-04-1998 |
| EP 0822460 | A | 04-02-1998 | JP | 10097102 A | 14-04-1998 |

EPO FORM P0459

For more details about this annex : see Official Journal of the European Patent Office, No. 12/82